**Europäisches Patentamt**

**European Patent Office**

**Office européen des brevets**

(19)

(11) **EP 1 447 707 A1**

(12) **DEMANDE DE BREVET EUROPEEN**

(43) Date de publication:
**18.08.2004 Bulletin 2004/34**

(51) Int Cl.⁷: **G02F 1/1334**, G02F 1/1343

(21) Numéro de dépôt: **04364006.9**

(22) Date de dépôt: **09.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **12.02.2003 FR 0301699**

(71) Demandeur: **Optogone**
**29280 Plouzané (FR)**

(72) Inventeurs:
• **De Bougrenet de la Tocnaye, Jean-Louis**
**29820 Guilers (FR)**

• **Barge, Michael**
**29290 Milizac (FR)**
• **Chevallier, Raymond**
**29000 Plougonvelin (FR)**
• **Dupont, Laurent**
**29280 Plouzane (FR)**
• **Loukina, Tatiana**
**29200 Brest (FR)**

(74) Mandataire: **Vidon, Patrice**
**Cabinet Vidon**
**16B, rue Jouanet - B.P. 90333**
**Technopôle Atalante**
**35703 Rennes Cédex 7 (FR)**

(54) **Dispositif de modulation spatiale d'un faisceau lumineux, et applications correspondantes**

(57) L'invention concerne un dispositif de modulation spatiale d'un faisceau lumineux, comprenant un élément à cristal liquide dispersé dans du polymère (PDLC), ledit élément comprenant au moins deux zones pouvant être adressées indépendamment l'une de l'autre au moyen d'un système à au moins deux électrodes (31,32,33,...,411,412,413,...).

Selon l'invention, lesdites électrodes présentent un motif prédéterminé non rectiligne (31,32,33,...), choisi de façon à réduire la sensibilité à la polarisation dudit dispositif, due à l'apparition d'au moins un champ électrique transverse entre lesdites au moins deux électrodes et ledit dispositif comprend également des moyens optiques de réduction de la sensibilité à la polarisation comprenant au moins une lame à retard de phase anisotrope (44,51).

Fig. 3

EP 1 447 707 A1

**Description**

Le domaine de l'invention est celui des télécommunications optiques. Plus précisément, l'invention concerne un dispositif de modulation spatiale de la lumière à cristal liquide, qui soit insensible à la polarisation du faisceau lumineux incident.

De tels dispositifs, couramment appelés modulateurs de lumière, sont des composants-clefs des systèmes de télécommunications actuels. En effet, ils peuvent être utilisés pour réaliser des fonctions dynamiques d'atténuation ou de déphasage spatial du faisceau lumineux, à des fins d'égalisation de spectre, de mise en forme du faisceau lumineux (en anglais "beam shaping"), ou encore d'obtention de lignes à retard variable ou de filtres accordables.

On connaît déjà plusieurs types de modulateurs capables d'assurer ces différentes fonctions, mais parmi ceux-ci, la présente invention concerne plus particulièrement les modulateurs de lumière comprenant un élément à cristal liquide, utilisé pour atténuer ou déphaser tout ou partie du faisceau lumineux.

Certains de ces modulateurs mettent en oeuvre une cellule de cristal liquide, contrôlée en tension, de façon que la tension appliquée au bornes de la cellule fasse varier la phase de la lumière qui la traverse par rotation de l'axe optique du cristal, d'une direction parallèle à la direction de propagation de la lumière vers une direction perpendiculaire, ou inversement. Un tel effet est par exemple exploité dans l'atténuateur optique présenté dans la demande de brevet internationale n°WO 02/071133 A2 au nom de XTELLUS Inc.

De nouveaux types de modulateurs ont récemment vu le jour, dans lesquels l'élément à cristal liquide a été remplacé par une cellule contenant un mélange de cristal liquide et de polymère, appelé PDLC (pour l'anglais "Polymer Dispersed Liquid Crystal", ou en français, "cristal liquide dispersé dans du polymère").

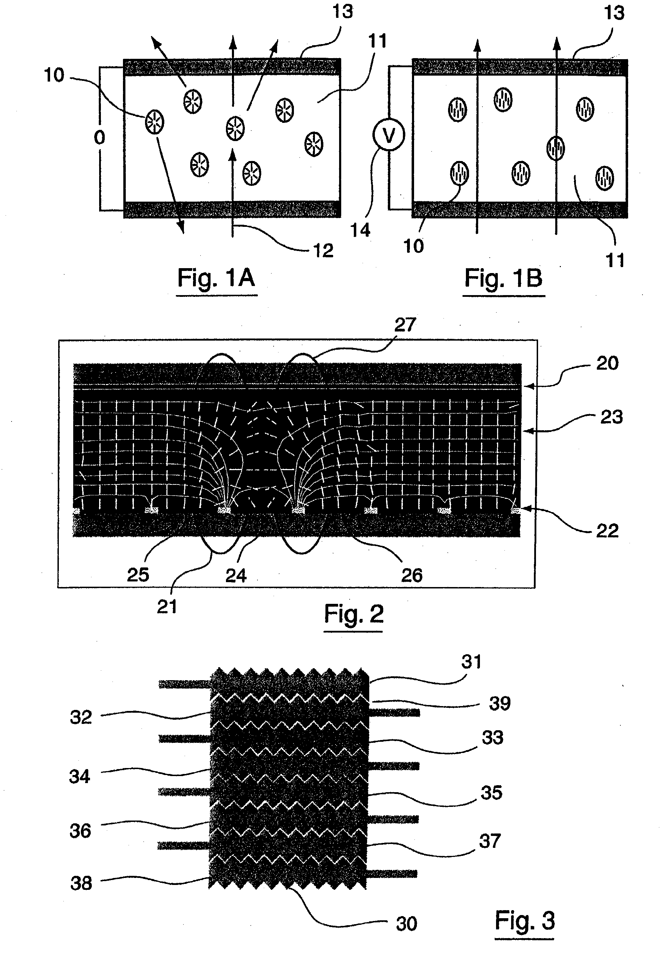

Le principe de fonctionnement d'une telle cellule de PDLC est décrit ci-dessous en relation avec les figures 1a et 1b. Des gouttelettes de cristal liquide 10 sont formées au sein d'un matériau polymère hôte 11. Au repos (figure 1a), c'est-à-dire en l'absence de tout champ électrique appliqué aux bornes de la cellule, l'orientation de ces gouttelettes au sein du polymère est quelconque. Du fait de la différence d'indice optique entre l'indice extraordinaire du cristal liquide et celui du polymère, la lumière 12 qui traverse la cellule 13 voit une multitude de diffuseurs, ou, si les gouttelettes sont petites par rapport à la longueur d'onde de la lumière (typiquement, de 10 à 100 nm, on parle alors de nano-PDLC), une multitude de retardateurs, ainsi qu'illustré par les flèches de la figure 1a.

Lorsqu'une tension 14 est appliquée aux bornes de la cellule (figure 1b), les gouttelettes de cristal liquide 10 s'alignent dans le champ électrique ainsi créé. Seul l'indice ordinaire du cristal liquide est alors visible par la lumière 12 : cet indice étant comparable à celui du polymère, le milieu devient transparent, ainsi qu'illustré par les flèches de la figure 1b.

Les effets d'atténuation ou de déphasage d'un faisceau lumineux obtenus au moyen d'une telle cellule de PDLC exploitent donc des propriétés très différentes de celles mises en oeuvre dans une cellule à cristal liquide classique. En effet, les propriétés utilisées dans une cellule de PDLC sont des propriétés de diffusion ou de retard de la lumière dus à la présence de gouttelettes de cristal liquide, et non, comme dans les cellules de cristal liquide classique, des propriétés liées à la rotation de l'axe optique du cristal.

La commande en tension d'une cellule de PDLC est généralement mise en oeuvre au moyen d'un système d'électrodes, organisées sous forme de barrettes ou de matrices, qui permettent d'adresser indépendamment certaines zones de la cellule, ou pixels.

Dans la configuration usuelle d'un modulateur spatial de lumière, c'est-à-dire lorsque le champ électrique appliqué au matériau PDLC est colinéaire au vecteur d'onde optique, un tel dispositif peut être considéré comme quasiment insensible à la polarisation, si le nombre, la taille et la forme des diffuseurs élémentaires (c'est-à-dire des gouttelettes de cristal liquide) sont correctement choisis.

Cette propriété d'insensibilité à la polarisation de la lumière incidente revêt une importance capitale dans le domaine des télécommunications, pour lequel on exige généralement une faible perte par dispersion de polarisation (ou PDL, pour l'anglais "Polarization Dispersion Loss").

Or, si la cellule de PDLC est divisée en une pluralité de zones élémentaires, ou pixels, qui peuvent être adressés indépendamment au moyen d'un système d'électrodes approprié, cette propriété d'insensibilité à la polarisation est généralement vérifiée dans la région centrale de chaque pixel élémentaire, mais pas dans les régions inter-pixels.

En effet, la différence de potentiel relative entre deux pixels adjacents adressés génère des champs électriques transverses, qui ont pour effet de donner une orientation préférentielle aux gouttelettes de cristal liquide, perpendiculairement au vecteur d'onde optique.

Ce phénomène dépend bien sûr des tensions relatives entre les différents pixels de la cellule, et son expression est minimale lorsque toutes les zones élémentaires de la cellule de PDLC présentent la même tension.

Dans le cas où les zones élémentaires de la cellule ne peuvent pas être obturées (ce qui est le cas par exemple lorsque le modulateur est utilisé pour réaliser une atténuation continue du signal optique, le signal lumineux éclairant alors l'ensemble du modulateur, et non pas chaque pixel individuellement), ce phénomène a pour effet la réintroduction d'une anisotropie optique macroscopique, qui provoque une augmentation de la PDL globale, et rend le modulateur incompatible avec les contraintes des systèmes de télécommunications optiques modernes.

Ce phénomène de sensibilité à la polarisation de la lumière incidente peut également se manifester dans la région utile d'un pixel, lorsque la dimension du pixel est petite par rapport à celle de la région inter-pixel : en effet, dans cette configuration, les effets du champ électrique créé sur un pixel sont sensibles sur le pixel voisin même au-delà de la zone inter-pixel.

Ce phénomène nuisible dû à la création de champs électriques transverses est présenté plus en détail en relation avec la figure 2.

On considère un modulateur spatial de lumière constitué de deux plaques de verres recouvertes, pour l'une, d'une contre-électrode 20, et pour l'autre, d'un réseau d'électrodes transparentes 22, entre lesquelles est inséré un matériau de type PDLC 23. Chaque électrode permet d'appliquer une tension d'adressage locale au matériau, et un champ électrique colinéaire au vecteur d'onde du faisceau lumineux éclairant le modulateur prend alors naissance. Chaque électrode du réseau étant portée à un potentiel propre, des variations de tensions relatives entre les électrodes (par exemple les électrodes référencées 24, 25 et 26) sont induites, et des tensions transversales, illustrées sur la figure 2 par les lignes de champs des zones 21 et 27, apparaissent.

Ces tensions transversales peuvent difficilement être réduites, du fait de la modulation variable sur les électrodes et des tensions de seuil élevées du cristal liquide. Elles dépendent cependant de l'amplitude du champ électrique transverse dans la zone inter-électrodes, et concourent à introduire des orientations privilégiées des gouttelettes de cristal liquide, ce qui induit une biréfringence du matériau PDLC.

Les inventeurs de la présente demande de brevet ont constaté que, dans la plupart des cas, compte tenu des valeurs des tensions d'adressage des différentes zones de l'élément à cristal liquide et des dimensions faibles des régions inter-pixels, ces tensions transversales induites sont suffisantes pour créer, en moyenne, une orientation privilégiée perpendiculaire au réseau d'électrodes.

L'invention a notamment pour objectif de fournir une technique de modulation spatiale de la lumière permettant de compenser ce phénomène, et donc de rendre la mise en oeuvre d'une telle technique indépendante de la polarisation de la lumière incidente.

On a déjà considéré le problème de la dépendance à la polarisation de dispositifs optiques à cristal liquide, comme par exemple dans la demande de brevet internationale n°WO 02/071133 A2 au nom de XTELLUS Inc. mentionnée ci-dessus. Cependant, le phénomène de dépendance à la polarisation apparaissant dans de tels dispositifs diffère fortement du phénomène que la présente invention cherche à résoudre, du fait de la différence de nature des matériaux utilisé (cristal liquide classique ou PDLC), ainsi qu'exposé précédemment. En effet, on rappelle que la propriété mise en oeuvre dans une cellule à cristal liquide classique est une propriété de rotation de l'axe optique du cristal liquide (modulation d'axe de biréfringence). Dans une cellule de PDLC, en revanche, les gouttelettes constituent des diffuseurs ou des retardateurs du faisceau de lumière.

En outre, les solutions envisagées notamment dans le document XTELLUS Inc. consistent à insérer dans le dispositif une lame quart d'onde ou demi-onde, selon que le dispositif présente une configuration en réflexion ou en transmission.

Cette solution ne permet pas de résoudre de façon satisfaisante le problème de la dépendance à la polarisation apparaissant dans les modulateurs spatiaux à base de PDLC auxquels la présente invention s'intéresse plus particulièrement.

L'invention a donc pour objectif de fournir une technique de modulation spatiale de la lumière à base d'une cellule de cristal liquide de type PDLC contrôlée par un système d'électrodes permettant de minimiser l'impact de l'apparition de champs transverses électriques entre les électrodes.

Plus précisément, un objectif de l'invention est de fournir une telle technique qui soit simple et peu coûteuse à mettre en oeuvre.

Un autre objectif de l'invention est de mettre en oeuvre une telle technique, qui puisse aisément être adaptée, en fonction du type d'application envisagé.

L'invention a encore pour objectif de fournir une telle technique, qui permette la conception de modulateurs spatiaux compacts et répondant aux exigences de fiabilité du domaine des télécommunications optiques.

Ces objectifs, ainsi que d'autres qui apparaîtront par la suite, sont atteints à l'aide d'un dispositif de modulation spatiale d'un faisceau lumineux, comprenant un élément à cristal liquide dispersé dans du polymère (PDLC), ledit élément comprenant au moins deux zones pouvant être adressées indépendamment l'une de l'autre au moyen d'un système à au moins deux électrodes.

Selon l'invention, lesdites électrodes présentent un motif prédéterminé non rectiligne, choisi de façon à réduire la sensibilité à la polarisation dudit dispositif, due à l'apparition d'au moins un champ électrique transverse entre lesdites au moins deux électrodes et ledit dispositif comprend également des moyens optiques de réduction de la sensibilité à la polarisation comprenant au moins une lame à retard de phase anisotrope.

Ainsi, l'invention repose sur une approche tout à fait nouvelle et inventive de la modulation spatiale de lumière à base d'une cellule de PDLC. En effet, les techniques de réduction de la sensibilité à la polarisation, envisagées par le passé pour des modulateurs à cellule de cristal liquide classiques, consistaient généralement à combiner le modulateur avec un ou plusieurs éléments optiques appropriés du type des lames quart d'onde ou de prismes biréfringents. Selon la présente approche en revanche, l'insensibilité à la polarisation d'un tel dispositif de modulation est obtenue en agissant directement sur le motif des électrodes de la cellule.

Ainsi, l'invention consiste à rompre le dessin régulier de l'électrode (classiquement rectiligne), de manière à éviter un alignement privilégié des champs électriques inter-électrodes, qui favorisent une direction d'alignement des gouttelettes de cristal liquide sur les bords des zones, ou pixels, du modulateur, et contribuent donc à accroître la PDL du dispositif.

On privilégie notamment les motifs d'électrode à moyenne nulle, de façon à minimiser de manière statistique les différents champs transverses électriques créés, et ainsi réduire l'alignement privilégié néfaste des gouttelettes de cristal liquide.

Pour accroître encore l'insensibilité à la polarisation du dispositif, on couple ce motif particulier d'électrodes à l'utilisation d'une lame à retard de phase, du type lame quart d'onde ou lame demi-onde. L'utilisation combinée d'une lame à retard de phase et d'un motif d'électrode non rectiligne permet ainsi d'assurer une indépendance en polarisation efficace du dispositif de l'invention.

Préférentiellement, ledit motif prédéterminé est à moyenne nulle.

On obtient alors une annulation statistique des champs transverses, qui produisent une orientation privilégiée des gouttelettes de cristal liquide.

Avantageusement, ledit cristal liquide est de type nano-PDLC, des gouttelettes dudit cristal liquide, dispersées dans ledit polymère, ayant un diamètre sensiblement compris entre 10 et 100 nm.

Selon une première variante avantageuse de l'invention, ledit motif d'électrode prédéterminé est sinusoïdal.

Selon une deuxième variante avantageuse de l'invention, ledit motif d'électrode prédéterminé est en dents de scie.

Selon un premier mode de réalisation préférentiel, ledit dispositif présente une configuration en réflexion et ladite lame à retard de phase est une lame quart d'onde.

De manière avantageuse, ledit système à au moins deux électrodes comprenant également au moins une contre-électrode, ladite lame quart d'onde est sensiblement orientée à 45° par rapport à la direction desdites électrodes, et elle est insérée entre ladite contre-électrode et un miroir.

Selon un deuxième mode de réalisation préférentiel, ledit dispositif présente une configuration en transmission et ladite lame à retard de phase est une lame demi-onde.

Avantageusement, dans ce deuxième mode de réalisation de l'invention, ladite lame demi-onde est insérée entre deux éléments à cristal liquide juxtaposés.

Ces différentes caractéristiques du dispositif de l'invention peuvent en outre être combinées à la mise en oeuvre d'un dispositif de diversité de polarisation, selon les différentes configurations ci-dessous.

Selon une première configuration avantageuse du dispositif de l'invention, ledit dispositif présente une configuration en transmission, et comprend :

- deux prismes biréfringents linéaires, montés tête-bêche ;
- une première lame demi-onde sensiblement orientée à 45° par rapport à la direction desdites électrodes ;
- une deuxième lame demi-onde située sur un chemin optique d'un ordre réfracté dudit faisceau en sortie d'un desdits prismes,

ledit élément à cristal liquide étant disposé entre lesdits prismes.

Une telle configuration a pour intérêt d'équilibrer les deux chemins optiques, il n'y a donc pas de PMD résiduelle. La direction de polarisation en sortie est soit horizontale, soit perpendiculaire, et son état est celui des états propres du biréfringent linéaire, à savoir une polarisation rectiligne.

Préférentiellement, un tel dispositif comprend également des moyens de collimation dudit faisceau en entrée et en sortie desdits prismes. En effet, cela permet une séparation des faisceaux.

Selon une deuxième configuration avantageuse du dispositif de l'invention, le dispositif présente une configuration en réflexion, et comprend :

- un prisme biréfringent linéaire ;
- une lame demie-onde située sur un chemin optique d'un premier ordre réfracté dudit faisceau en sortie dudit prisme ;
- des moyens de retard situés sur un chemin optique d'un deuxième ordre réfracté dudit faisceau en sortie dudit prisme ;
- un miroir,

ledit élément à cristal liquide étant situé entre ledit miroir et un ensemble comprenant ledit prisme, ladite lame et lesdits moyens de retard.

Le prisme est par exemple un prisme de calcite. Les moyens de retard permettent de compenser la différence de chemin optique au retour.

Selon une troisième configuration avantageuse du dispositif de l'invention, le dispositif comprend en outre :

- deux prismes biréfringents linéaires, montés tête-bêche ;
- un cube séparateur de polarisation, connectant lesdits prismes ;
- deux lames demi-ondes, disposées respectivement sur une sortie extraordinaire et une entrée ordinaire desdits prismes,

ledit élément à cristal liquide étant disposé entre ladite lame quart d'onde et ledit cube séparateur de polarisation.

Plus complexe, cette troisième configuration vise à équilibrer les chemins optiques. Elle permet une séparation de l'entrée et de la sortie, qui évite l'utilisation éventuelle d'un circulateur.

Selon une caractéristique avantageuse de l'invention, ledit système à au moins deux électrodes comprenant également au moins une contre-électrode, ladite contre-électrode comprend au moins deux électrodes divisées chacune en au moins deux zones élémentaires appelées pixels.

Préférentiellement, lesdites au moins deux zones dudit élément à cristal liquide sont divisées chacune en au moins deux sous-zones dans une direction orthogonale à la direction d'alignement desdites zones.

Avantageusement, ledit dispositif comprend des moyens de contrôle de tensions d'adressage desdites sous-zones, permettant une réduction complémentaire de la sensibilité à la polarisation dudit dispositif.

Selon une première variante avantageuse, lesdits moyens de contrôle maximisent les différences de tensions d'adressage entre deux sous-zones adjacentes.

En effet, le nombre de diffuseurs complètement orientés transversalement sera plus important, et la plus forte orientation des gouttelettes rendra donc plus efficace la méthode de réduction de la sensibilité à la polarisation de l'invention.

Préférentiellement, deux sous-zones adjacentes présentent des tensions d'adressage alternées. De telles tensions alternées permettent de forcer l'existence de champs transverses.

Selon une deuxième variante avantageuse, lesdits moyens de contrôle minimisent les différences de tensions d'adressage entre deux sous-zones adjacentes. On minimise ainsi les champs transverse entre les sous-pixels voisins.

De manière préférentielle, les tensions d'adressage desdites sous-zones sont étagées de manière sensiblement régulière.

Le dispositif de la présente invention trouve avantageusement des applications dans l'un des domaines appartenant au groupe comprenant :

- l'atténuation d'un faisceau lumineux ;
- le déphasage au moins partiel d'un faisceau lumineux ;
- l'égalisation de spectre ;
- la mise en forme de faisceaux lumineux ;
- la conception de lignes à retard variable ;
- la conception de filtres accordables ;
- la sélection de bandes spectrales ;
- les multiplexeurs d'insertion extraction (ou en anglais OADM pour "Optical Add Drop Multiplexer").

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- les figures 1a et 1b présentent le principe de fonctionnement d'une cellule à cristal liquide de type PDLC mise en oeuvre dans le dispositif de modulation de l'invention ;
- la figure 2 illustre le phénomène de création de champs électriques transverses dans les zones inter-électrodes de la cellule de la figure 1 ;
- la figure 3 présente un exemple de motifs d'électrodes conforme à la présente invention ;
- la figure 4 illustre une première variante de réalisation de l'invention dans laquelle la sensibilité à la polarisation est encore réduite par l'utilisation d'une lame quart d'onde ;
- la figure 5 présente une deuxième variante de réalisation de l'invention mettant en oeuvre une lame demie-onde dans une configuration en transmission ;
- les figures 6a et 6b présentent une troisième variante de réalisation dans laquelle la sensibilité à la polarisation est encore réduite par mise en oeuvre d'une structure bidimensionnelle des pixels du modulateur permettant de réduire l'isotropie de la direction des champs transverses ;

- les figures 7a et 7b illustrent un perfectionnement de la variante de la figure 6 ;
- les figures 8a à 8c décrivent d'autres variantes de réalisation de l'invention reposant sur l'utilisation de prismes biréfringents linéaires.

Le principe général de l'invention repose sur la conception d'un motif d'électrode particulier permettant de réduire l'alignement néfaste des gouttelettes de cristal liquide dues à l'apparition de champs électriques transverses entre les électrodes du modulateur.

On présente, en relation avec la figure 3, un exemple de motif d'électrode conforme à l'invention.

Le dispositif de modulation comprend par exemple 8 électrodes référencées 31 à 38, permettant d'adresser indépendamment 8 zones, ou pixels, de la cellule à PDLC. Ces électrodes présentent chacune un motif à chevrons 30, dans lequel chacun des chevrons présente un angle sensiblement égal à 90°, de façon que les deux directions privilégiées d'alignement du cristal liquide, dues à l'apparition de champs transverses dans les zones inter-pixels (par exemple la zone 39 entre les électrodes référencées 31 et 32), soient orthogonales. Ainsi, les champs électriques transverse se compensent et s'annulent.

Tout autre motif d'électrode à moyenne nulle, par exemple un motif d'électrode sinusoïdal, peut également être utilisé.

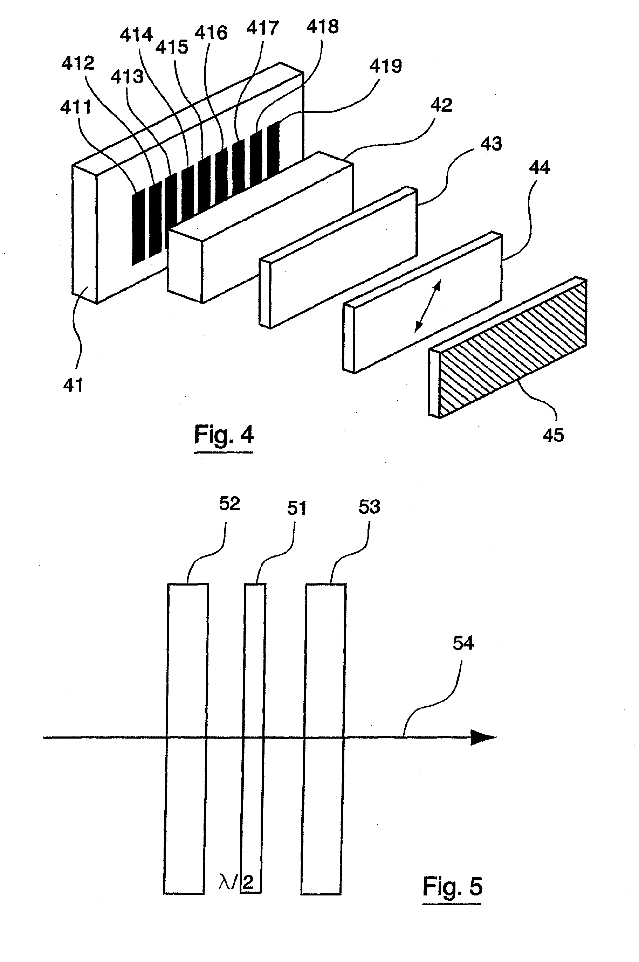

L'indépendance du dispositif de modulation à la polarisation du faisceau de lumière incident peut encore être améliorée, en sus du motif d'électrode particulier décrit ci-dessus, par l'insertion d'une lame quart d'onde dans un montage en réflexion du modulateur de l'invention, ainsi que présenté en figure 4.

Le modulateur 41 comprend 9 électrodes référencées 411 à 419, dont le motif est par exemple tel que présenté précédemment en relation avec la figure 3. Le dispositif de modulation de l'invention comprend également une cellule de PDLC 42 et une contre-électrode 43. Une lame quart d'onde orientée à 45° par rapport à la direction des électrodes 411 à 419 est insérée entre la contre-électrode 43 du modulateur et un miroir diélectrique 45.

L'insensibilité à la polarisation d'un tel dispositif de modulation peut être démontrée par le calcul suivant.

Le modulateur peut être considéré comme un dichroïque présentant une orientation perpendiculaire aux électrodes, et défini par la matrice de Jones suivante :

$$J_{dc} = \begin{pmatrix} 1 & 0 \\ 0 & e^{-\alpha} \end{pmatrix}$$

Par rapport à cette orientation, la matrice de Jones d'une lame quart d'onde orientée à 45° est la suivante :

$$J_{\lambda/4} = \frac{1}{\sqrt{2}} \begin{pmatrix} 1 & i \\ i & 1 \end{pmatrix}$$

La composition du dichroïque, de la lame et du miroir donne en réflexion le résultat suivant :

$$J_{total} = \frac{1}{2} \begin{pmatrix} 1 & 0 \\ 0 & e^{-\alpha} \end{pmatrix} \begin{pmatrix} 1 & i \\ i & 1 \end{pmatrix} \begin{pmatrix} 1 & i \\ i & 1 \end{pmatrix} \begin{pmatrix} 1 & 0 \\ 0 & e^{-\alpha} \end{pmatrix} = ie^{-\alpha} \begin{pmatrix} 0 & 1 \\ 1 & 0 \end{pmatrix}$$

L'atténuation s'opère donc sur les deux composantes de la polarisation d'entrée de façon équivalente : il reste une atténuation isotrope mais il n'y a plus de PDL et cela, quelle que soit la polarisation d'entrée. Cette expression démontre l'insensibilité du dispositif à une polarisation d'entrée dont on ne contrôlerait ni l'état ni l'orientation.

La figure 5 présente un montage équivalent en termes de performance, mais dans lequel le dispositif de modulation est utilisé en transmission.

Une fonction équivalente à celle de la figure 4 peut ainsi être obtenue au moyen d'une lame demi-onde 51, intercalée entre deux dispositifs de modulation selon l'invention 52 et 53, représentés en coupe sur la figure 5. La direction de propagation du faisceau lumineux est illustré par la flèche référencée 54.

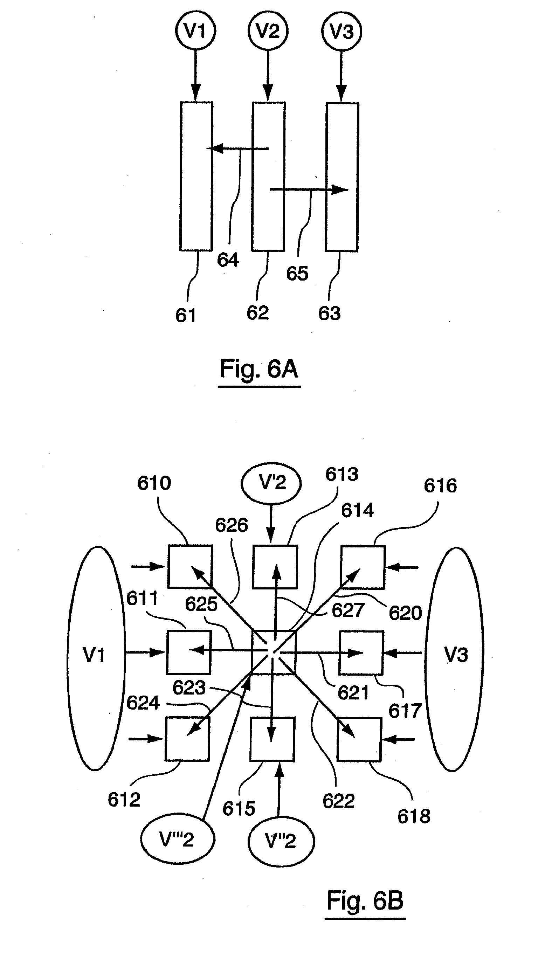

On présente désormais, en relation avec les figures 6a et 6b, une variante de réalisation de l'invention, dans laquelle l'insensibilité à la polarisation du dispositif de modulation est accrue, grâce à une structure particulière des zones, ou pixels, de l'élément à cristal liquide.

L'idée consiste à concevoir un dispositif de modulation bidimensionnel, c'est-à-dire à utiliser le degré de liberté supplémentaire offert par la direction orthogonale à la direction de pixellisation de l'élément à cristal liquide.

Dans cette variante de réalisation, on met donc en oeuvre un modulateur bidimensionnel, pour lequel une zone, ou pixel, unique est remplacée par un ensemble de « sous-pixels » disposés dans une direction orthogonale à la direction d'alignement des pixels. Ainsi, si l'on considère les zones référencées 61, 62 et 63 de la cellule de PDLC, alignées horizontalement (figure 6a), chacune d'elles (par exemple la zone référencée 61) est divisée en trois sous-zones dans la direction verticale (par exemple les sous-zones référencées 610, 611 et 612 - figure 6b).

De ce fait, lorsque le modulateur spatial est utilisé à des fins d'atténuation d'un faisceau lumineux, une telle atténuation se fait en adressant sélectivement des « sous-pixels » (610, 611, 612) de la structure. En optimisant le choix des pixels adressés et la valeur des tensions appliquées à ces pixels pour un niveau d'atténuation donnée, on pourra obtenir une répartition moins sélective de la direction des champs transverses et, par là même, diminuer fortement la dépendance en polarisation du dispositif de modulation.

En effet, lorsqu'une telle variante de réalisation n'est pas mise en oeuvre, des champs planaires référencés 64 et 65 peuvent prendre naissance, selon une direction horizontale, dans les zones inter-pixels, entre le pixel référencé 62 et chacun des pixels référencés 61 et 63 par exemple.

En revanche, lorsque chacun des pixels 61, 62 et 63 est divisé en trois sous-pixels référencés 610 à 618, on peut choisir les tensions d'adressage V1, V'2, V"2, V'''2 et V3 appliquées à chacun de ces sous-pixels, de façon à réduire l'isotropie de la direction des champs transverses référencés 620 à 627 prenant naissance par exemple entre le sous-pixel référencé 614 et chacun de ses voisins. Ainsi, on peut choisir de remplacer la tension d'adressage V2 appliquée à l'électrode référencée 62 par un jeu de trois tensions d'adressage V'2, V"2, et V'''2 appliquées chacune à l'un des trois sous-pixels référencés 613, 614 et 615.

Pour accroître encore l'indépendance à la polarisation du dispositif de modulation de l'invention, on peut également remplacer la contre-électrode de l'élément à cristal liquide par deux électrodes pixellisées, afin de réduire les tensions inter-électrodes. Dans ce cas, les tensions à appliquer sur chaque pixel de la contre-électrode sont divisées par un facteur deux pour obtenir un champ longitudinal équivalent (et donc un niveau d'atténuation équivalent) à la solution utilisant une contre-électrode commune. Les champs transverses sont réduits d'autant.

Cette variante de réalisation peut être ou non combinée à la variante décrite ci-dessus en relation avec la figure 6, selon laquelle on divise les zones de l'élément à cristal liquide en sous-zones. Elle peut également être ou non combinée à l'une des variantes décrites précédemment en relation avec les figures 4 et 5 consistant à insérer une lame quart d'onde ou demi-onde dans le montage de l'invention.

On présente désormais un perfectionnement de la variante présentée en relation avec la figure 6.

Comme indiqué précédemment, en sur-échantillonnant spatialement les pixels dans l'axe du modulateur (direction de pixellisation), il est possible d'obtenir un degré de liberté supplémentaire, que sont les tensions à fournir aux sous-pixels pour un obtenir un niveau d'atténuation voulue (lorsque le dispositif de modulation de l'invention est, à titre d'exemple, utilisé à des fins d'atténuation d'un faisceau lumineux). Ainsi, pour une même résolution spectrale, une longueur d'onde ou bande spectrale illuminant un pixel, couvrira plusieurs sous-pixels et il sera possible d'utiliser ces degrés de liberté pour fortement réduire les champs transverses.

Une première solution consiste, à l'encontre de tout préjugé, à favoriser les champs transverses en maximisant les différences de potentiels entre sous-pixels voisins. De ce fait, le nombre de diffuseurs (ou gouttelettes de cristal liquide) complètement orientés transversalement sera plus important que dans le cas où il n'y a pas de sur échantillonnage (c'est-à-dire dans le cas où l'on ne divise pas un pixel en une pluralité de sous-pixels). Comme indiqué précédemment en relation avec les figures 4 et 5, l'usage d'une lame à retard de phase (lame quart d'onde ou lame demi-onde) sera nécessaire afin de rendre le système insensible à la polarisation, mais la plus forte orientation des gouttelettes rendra la méthode plus efficace.

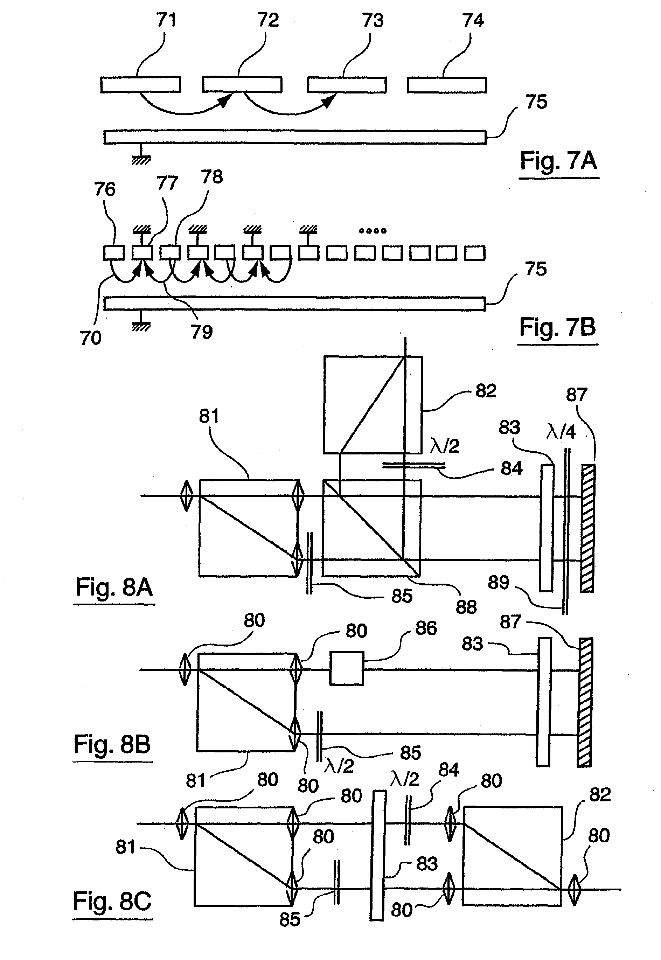

Cette première solution est illustrée en figures 7a et 7b. Sur la figure 7a, on peut voir que la cellule de PDLC (non représentée) est adressée au moyen d'un jeu d'électrodes référencées 71 à 74 et d'une contre-électrode 75. Dans la variante de réalisation de la figure 7b, chaque pixel 71 à 74 a été divisé en une pluralité de sous-pixels, dont seuls trois ont été référencés 76 à 78 par souci de simplification. Comme l'illustrent les flèches antagonistes 70 et 79, des tensions alternées sont appliquées à ces sous-pixels, de façon à forcer l'existence de champs transverses entre les électrodes, dans les zones inter-pixels.

Une deuxième solution consiste au contraire à utiliser ces degrés de liberté en cherchant à minimiser les champs transverses entre les sous-pixels.

Un plus grand nombre de degrés de liberté (à savoir les tensions d'adressage des sous-pixels) par rapport aux contraintes (à savoir les niveaux des canaux à atténuer) permet de diminuer la dépendance à la polarisation du dispositif. Une telle solution consiste donc, par exemple, à étager régulièrement les tensions entre sous pixels.

On présente désormais, en relation avec les figures 8a à 8c d'autres variantes de réalisation de l'invention reposant sur l'utilisation de prismes biréfringents linéaires. Ces solutions techniques peuvent être utilisées seules, en complément du motif d'électrodes particulier présenté en figure 3, ou en combinaison avec l'une des autres techniques illustrées par les figures 4 à 7.

Ces solutions s'inscrivent dans le contexte plus général des configurations dans lesquelles on contrôle la direction de la polarisation du faisceau de lumière incident.

En effet, dans le cas où la polarisation du faisceau incident est rectiligne, on peut l'orienter suivant l'une des deux directions parallèle ou perpendiculaire à la direction des électrodes du dispositif de modulation de l'invention. Par rapport à la configuration de la figure 4, il n'est alors plus nécessaire de disposer une lame quart d'onde entre le modulateur et le miroir pour accroître l'insensibilité à la polarisation du dispositif de l'invention. Lorsque l'état de polarisation est quelconque, on est en revanche ramené au cas décrit précédemment en relation avec la figure 4 : la lame permet d'améliorer l'indépendance du dispositif à la polarisation, et l'orientation de la polarisation en entrée peut alors être quelconque.

Plusieurs techniques peuvent être utilisées pour assurer le contrôle de la polarisation en entrée.

Une première solution consiste à utiliser un dispositif de diversité de polarisation.

Trois configurations sont alors possibles. La première configuration en transmission est illustrée en figure 8c et consiste à utiliser par exemple deux prismes biréfringents linéaires 81 et 82 (e.g. du type calcite) montés tête-bêche, entre lesquels sont disposés le modulateur PDLC 83, une lame demie-onde 84 à 45° de l'orientation des électrodes ainsi qu'une lame demie-onde 85 à 45° sur la sortie du premier prisme 81 sur l'un des deux ordres réfractés permettant la réorientation de celui-ci suivant la direction orthogonale.

Un tel montage permet avantageusement d'équilibrer les deux chemins optiques ; il n'y a donc pas de PMD ("Polarisation Mode Dispersion", en français, "dispersion de mode de polarisation") résiduelle. La direction de polarisation en sortie est, soit horizontale, soit perpendiculaire, et son état est celui de l'un des états propres du biréfringent linéaire 81, à savoir une polarisation rectiligne. Pour des raisons pratiques de séparation, les faisceaux doivent être collimatés à l'entrée et à la sortie du prisme au moyen de micro lentilles 80.

Deux autres configurations en réflexion sont illustrées par les figures 8a et 8b. La configuration de la figure 8b utilise un même prisme de calcite 81 (avec collimation du faisceau au moyen de micro lentilles 80), une lame demie-onde 85 suivant un ordre réfracté issu du prisme 81 (suivant le principe présenté précédemment en relation avec la figure 8c) et un retard 86 sur l'autre ordre pour compenser la différence de chemin optique au retour. Le modulateur 83 est ensuite disposé devant un miroir 87.

La configuration de la figure 8a utilise un montage plus complexe visant à équilibrer les chemins optiques. Par rapport au système présenté précédemment en relation avec la figure 4, il permet en outre une séparation de l'entrée et de la sortie, qui évite l'utilisation éventuelle d'un circulateur. Deux prismes biréfringents linéaires 81 et 82 sont connectés tête-bêche, via un cube séparateur de polarisation 88. Deux lames demi-ondes 84 et 85 sont disposées respectivement sur leur sortie extra-ordinaire et entrée ordinaire. Le modulateur 83 est disposé dans une configuration identique à celle décrite en figure 4, et est combiné à une lame quart d'onde 89 et à un miroir 87.

Au premier passage du faisceau lumineux, une polarisation quelconque est décomposée et orientée parallèlement aux lignes de champs inter-pixels. Après un double passage du faisceau au travers de la lame quart d'onde 89 et du modulateur 83, la direction de polarisation du faisceau est tournée de 90°, et est donc routée sur le prisme biréfringent de sortie 82.

Pour assurer le contrôle de la polarisation en entrée dans le cas d'une polarisation rectiligne, une deuxième solution consiste à utiliser des amplificateurs optiques à maintien de polarisation. La direction de polarisation du faisceau lumineux en entrée du dispositif de l'invention est alors contrôlée, et on peut l'orienter suivant l'une des deux directions orthogonales à la direction des électrodes ou la direction perpendiculaire.

Il apparaîtra de manière évidente pour l'Homme du Métier que les différentes solutions présentées dans le présent document pour réduire la sensibilité à la polarisation du dispositif de modulation de l'invention peuvent être combinées pour améliorer autant que faire se peut les performances du modulateur, ou peuvent être mises en oeuvre indépendamment les unes des autres, en combinaison avec un motif d'électrodes approprié à la réduction de l'apparition des champs transverses dans les zones inter-électrodes.

**Revendications**

1. Dispositif de modulation spatiale d'un faisceau lumineux, comprenant un élément à cristal liquide dispersé dans du polymère (PDLC), ledit élément comprenant au moins deux zones pouvant être adressées indépendamment l'une de l'autre au moyen d'un système à au moins deux électrodes,
**caractérisé en ce que** lesdites électrodes présentent un motif prédéterminé non rectiligne, choisi de façon à réduire la sensibilité à la polarisation dudit dispositif, due à l'apparition d'au moins un champ électrique transverse entre lesdites électrodes,

et **en ce qu'**il comprend également des moyens optiques de réduction de la sensibilité à la polarisation comprenant au moins une lame à retard de phase anisotrope.

2. Dispositif selon la revendication 1, **caractérisé en ce que** ledit motif prédéterminé est à moyenne nulle.

3. Dispositif selon l'une quelconque des revendications 1 et 2, **caractérisé en ce que** ledit cristal liquide est de type nano-PDLC, des gouttelettes dudit cristal liquide dispersées dans ledit polymère ayant un diamètre sensiblement compris entre 10 et 100 nm.

4. Dispositif selon l'une quelconque des revendications 1 à 3, **caractérisé en ce que** ledit motif d'électrode prédéterminé est sinusoïdal.

5. Dispositif selon l'une quelconque des revendications 1 à 4, **caractérisé en ce que** ledit motif d'électrode prédéterminé est en dents de scie.

6. Dispositif selon l'une quelconque des revendications 1 à 5, **caractérisé en ce qu'**il présente une configuration en réflexion et **en ce que** ladite lame à retard de phase est une lame quart d'onde.

7. Dispositif selon la revendication 6, **caractérisé en ce que**, ledit système à au moins deux électrodes comprenant également au moins une contre-électrode, ladite lame quart d'onde est sensiblement orientée à 45° par rapport à la direction desdites électrodes, et **en ce qu'**elle est insérée entre ladite contre-électrode et un miroir.

8. Dispositif selon l'une quelconque des revendications 1 à 5, **caractérisé en ce qu'**il présente une configuration en transmission et **en ce que** ladite lame à retard de phase est une lame demi-onde.

9. Dispositif selon la revendication 8, **caractérisé en ce que** ladite lame demi-onde est insérée entre deux éléments à cristal liquide juxtaposés.

10. Dispositif selon l'une quelconque des revendications 1 à 5, 8 et 9, **caractérisé en ce qu'**il présente une configuration en transmission, et **en ce qu'**il comprend :

    - deux prismes biréfringents linéaires, montés tête-bêche ;
    - une première lame demi-onde sensiblement orientée à 45° par rapport à la direction desdites électrodes ;
    - une deuxième lame demi-onde située sur un chemin optique d'un ordre réfracté dudit faisceau en sortie d'un desdits prismes,

    ledit élément à cristal liquide étant disposé entre lesdits prismes.

11. Dispositif selon la revendication 10, **caractérisé en ce qu'**il comprend également des moyens de collimation dudit faisceau en entrée et en sortie desdits prismes.

12. Dispositif selon l'une quelconque des revendications 1 à 7, **caractérisé en ce qu'**il présente une configuration en réflexion, et **en ce qu'**il comprend :

    - un prisme biréfringent linéaire ;
    - une lame demie-onde située sur un chemin optique d'un premier ordre réfracté dudit faisceau en sortie dudit prisme ;
    - des moyens de retard situés sur un chemin optique d'un deuxième ordre réfracté dudit faisceau en sortie dudit prisme ;
    - un miroir,

    ledit élément à cristal liquide étant situé entre ledit miroir et un ensemble comprenant ledit prisme, ladite lame et lesdits moyens de retard.

13. Dispositif selon la revendication 7, **caractérisé en ce qu'**il comprend en outre :

    - deux prismes biréfringents linéaires, montés tête-bêche ;
    - un cube séparateur de polarisation, connectant lesdits prismes ;

- deux lames demi-ondes, disposées respectivement sur une sortie extraordinaire et une entrée ordinaire desdits prismes,

ledit élément à cristal liquide étant disposé entre ladite lame quart d'onde et ledit cube séparateur de polarisation.

14. Dispositif selon l'une quelconque des revendications 1 à 13, **caractérisé en ce que**, ledit système à au moins deux électrodes comprenant également au moins une contre-électrode, ladite contre-électrode comprend au moins deux électrodes divisées chacune en au moins deux zones élémentaires appelées pixels.

15. Dispositif selon l'une quelconque des revendications 1 à 14, **caractérisé en ce que** lesdites au moins deux zones dudit élément à cristal liquide sont divisées chacune en au moins deux sous-zones dans une direction orthogonale à la direction d'alignement desdites zones.

16. Dispositif selon l'une quelconque des revendications 1 à 15, **caractérisé en ce qu'**il comprend des moyens de contrôle de tensions d'adressage desdites sous-zones, permettant une réduction complémentaire de la sensibilité à la polarisation dudit dispositif.

17. Dispositif selon la revendication 16, **caractérisé en ce que** lesdits moyens de contrôle maximisent les différences de tensions d'adressage entre deux sous-zones adjacentes.

18. Dispositif selon la revendication 17, **caractérisé en ce que** deux sous-zones adjacentes présentent des tensions d'adressage alternées.

19. Dispositif selon la revendication 16, **caractérisé en ce que** lesdits moyens de contrôle minimisent les différences de tensions d'adressage entre deux sous-zones adjacentes.

20. Dispositif selon la revendication 19, **caractérisé en ce que** les tensions d'adressage desdites sous-zones sont étagées de manière sensiblement régulière.

21. Applications du dispositif selon l'une quelconque des revendications 1 à 20 à l'un des domaines appartenant au groupe comprenant :

- l'atténuation d'un faisceau lumineux ;
- le déphasage au moins partiel d'un faisceau lumineux ;
- l'égalisation de spectre ;
- la mise en forme de faisceaux lumineux ;
- la conception de lignes à retard variable ;
- la conception de filtres accordables ;
- la sélection de bandes spectrales ;
- les multiplexeurs d'insertion extraction (ou en anglais OADM pour "Optical Add Drop Multiplexer").

Fig. 1A

Fig. 1B

Fig. 2

Fig. 3

Fig. 4

Fig. 5

Fig. 6A

Fig. 6B

Fig. 7A

Fig. 7B

Fig. 8A

Fig. 8B

Fig. 8C

**Office européen des brevets**

**RAPPORT DE RECHERCHE EUROPEENNE**

Numéro de la demande

EP 04 36 4006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 622 655 A (MATSUSHITA ELECTRIC IND CO LTD) 2 novembre 1994 (1994-11-02) * colonne 12, ligne 35 - colonne 13, ligne 40; figures 6,7 * | 1 | G02F1/1334 G02F1/1343 |
| A,D | WO 02/071133 A (COHEN GIL ;XTELLUS INC (US)) 12 septembre 2002 (2002-09-12) * figures 1-5,12,13 * | 6-9,14 | |
| A | EP 0 878 729 A (SHARP KK) 18 novembre 1998 (1998-11-18) * colonne 1, ligne 10-50 * * colonne 3, ligne 11-27; figures 1,4,7 * | 6-9,15 | |
| A | TAKIZAWA K ET AL: "POLARIZATION-INDEPENDENT OPTICAL FIBER MODULATOR BY USE OF POLYMER-DISPERSED LIQUID CRYSTALS" APPLIED OPTICS, OPTICAL SOCIETY OF AMERICA,WASHINGTON, US, vol. 37, no. 15, 20 mai 1998 (1998-05-20), pages 3181-3189, XP000765274 ISSN: 0003-6935 * page 3182; figure 1 * | 1,21 | DOMAINES TECHNIQUES RECHERCHES (Int.Cl.7) G02F |
| A | MATSUMOTO S ET AL: "LIGHT PROCESSING AND OPTICAL DEVICES USING NANO-SIZED DROPLETS OF LIQUID CRYSTAL DISPERSED IN POLYMER" JOURNAL OF INTELLIGENT MATERIAL SYSTEMS AND STRUCTURES, TECHNOMIC PUBL., LANCASTER, PA, US, vol. 10, no. 6, juin 1999 (1999-06), pages 489-492, XP000998768 ISSN: 1045-389X * page 489 * * page 492; figures 2,5 * | 1,3 | |

Le présent rapport a été établi pour toutes les revendications

| Lieu de la recherche | Date d'achèvement de la recherche | Examinateur |
|---|---|---|
| MUNICH | 24 mai 2004 | Noirard, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 1 447 707 A1**

ANNEXE AU RAPPORT DE RECHERCHE EUROPEENNE
RELATIF A LA DEMANDE DE BREVET EUROPEEN NO.                    EP 04 36 4006

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-05-2004

| Document brevet cité au rapport de recherche | | Date de publication | Membre(s) de la famille de brevet(s) | | Date de publication |
|---|---|---|---|---|---|
| EP 0622655 | A | 02-11-1994 | EP | 1134720 A2 | 19-09-2001 |
| | | | EP | 0622655 A2 | 02-11-1994 |
| | | | JP | 7230075 A | 29-08-1995 |
| | | | JP | 2004046278 A | 12-02-2004 |
| | | | KR | 226383 B1 | 15-10-1999 |
| | | | KR | 226382 B1 | 15-10-1999 |
| | | | US | 6177965 B1 | 23-01-2001 |
| WO 02071133 | A | 12-09-2002 | EP | 1371156 A2 | 17-12-2003 |
| | | | EP | 1370900 A2 | 17-12-2003 |
| | | | WO | 02071660 A2 | 12-09-2002 |
| | | | WO | 02071133 A2 | 12-09-2002 |
| EP 0878729 | A | 18-11-1998 | GB | 2325056 A | 11-11-1998 |
| | | | EP | 0878729 A2 | 18-11-1998 |
| | | | JP | 3512150 B2 | 29-03-2004 |
| | | | JP | 10311975 A | 24-11-1998 |
| | | | KR | 263210 B1 | 01-08-2000 |
| | | | US | 5973817 A | 26-10-1999 |

EPO FORM P0460

Pour tout renseignement concernant cette annexe : voir Journal Officiel de l'Office européen des brevets, No.12/82

16